# EUROPEAN PATENT APPLICATION

(11) **EP 3 578 353 A1**
(43) Date of publication of application: **11.12.2019**
(21) Application number: 18747457.2
(22) Date of filing: 19.01.2018
(51) Int. Cl.: B32B 3/02, B29C 43/20, B29C 43/34, B29C 69/00, B32B 5/28, B29K 101/12, B29L 9/00

(54) **INTEGRALLY MOLDED BODY AND METHOD FOR PRODUCING SAME**

(30) Priority: 31.01.2017 JP 2017015382
(71) Applicant: Toray Industries, Inc., Tokyo 103-8666 (JP)
(72) Inventor: NAKAYAMA Hiroyuki, Nagoya-shi Aichi 455-8502 (JP); SASAKI Hideaki, Nagoya-shi Aichi 455-8502 (JP); MORIUCHI Masanari, Nagoya-shi Aichi 455-8502 (JP)
(74) Representative: Hoefer & Partner Patentanwälte mbB
(86) International application number: PCT/JP2018/001605
(87) International publication number: WO 2018/142971

(57) **Abstract**

Provided is an integrally molded body in which a separate structure (C) is joined to at least a part of an end section of a sandwich structure constituted of a core layer composed of discontinuous fibers and a thermoplastic resin (A) and a skin layer composed of continuous fibers and a resin (B), wherein: the sandwich structure has a stepped section at least at a part of the end section; the stepped section is constituted of a main body section forming a high surface in the stepped section, an interface section forming an interface connecting the high surface and a low surface of the stepped section, and a thinnest section having a core layer which has a porosity lower than a porosity of a core layer in the main body section; and the separate structure (C) does not contact with the interface, and is joined to only at least a part of the thinnest section. Also provided is a method for producing same. Obtained is an integrally molded body that is lightweight, has a high strength and a high rigidity, and is thin, yet has an excellent design surface.

## Description

### Technical Field of the Invention

The present invention relates to an integrally molded body which is used, for example, as a component or a casing portion of a personal computer, office automation equipment, mobile phone or the like, which is required to be lightweight, high-strength, high-rigidity and thin-walled and which is suitable for an application requiring an excellent design surface, and a method for producing the same.

### Background Art of the Invention

Currently, as electric and electronic devices such as personal computers, office automation equipment, AV equipment, mobile phones, telephones, facsimile machines, household electric appliances, toy goods, etc. are becoming more portable, making the devices smaller and lighter is required. In order to accomplish the requirement, for parts constituting the devices, especially for a casing, since it is necessary to prevent the casing from being bent greatly when a load is externally applied so as not to come into contact with internal parts or not to be destroyed, thinning is required while achieving high strength and high rigidity..

Further, in order to satisfy the above-described requirement, a molded structure is known wherein a separate structure is joined to a sandwich structure comprising a core layer composed of reinforcing fiber and a resin and a skin layer composed of reinforcing fiber and a resin, and they are integrally molded to be made small-sized and lightweight, but in such a molded structure, further reduction in thickness and reliability in joining are required.

In Patent document 1, described is "a configuration wherein in a composite molded article (I) composed of a laminate member (II) having a sandwich structure and a resin member (III) disposed on at least a part of the periphery of the plate end section of the laminate member (II), at least a part of the resin member (III) forms a convex shape with respect to a soft member layer (IIb) in the joining section of the laminate member (II) and the resin member (III)", and disclosed is an effect that "lightweight, high strength · high rigidity, and thinning can be achieved". As the soft member layer (IIb), for weight reduction, a foamed material, a resin sheet and the like can be preferably used, and the purpose of using a laminate member (II) having a relatively low compressive strength such as a foamed material is in that by injection molding it is easy to form the resin member (III) in a convex shape and to further reduce the weight of the laminate member (II) (paragraph [0023]). However, in this configuration of Patent document 1, in the structure in which the resin member (III) is injection molded to a concave shape portion of the soft member layer (IIb) to form a convex shape so as to be joined to the soft member layer (IIb), a joining strength can be given only to a region contacted at a line state, the contact area is small, and the joining strength is limited. Further, in order to increase the joining strength, it is necessary to increase the layer thickness of the soft member layer (IIb) forming the convex shape, which hinders thinning.

Further, in Patent document 2, described is a production method wherein "a fiber reinforced resin A is disposed in a mold as a preliminarily molded body, and as a side surface of the fiber reinforced resin A that comes into contact with a resin B, a side surface having at least two inclined surfaces that are inclined in a concave shape at different angles from each other is formed before insert molding, and the fiber reinforced resin A is insert molded by supplying a liquefied resin B", and by this, disclosed is an effect that "it becomes difficult that a closed space into which the resin B hardly flows is formed, so that it becomes possible that the resin B flows into the entire side surface of the fiber reinforced resin A until it contacts satisfactorily. As a result, the adhesiveness between the fiber reinforced resin A and the resin B and its reliability can be ensured". However, in this configuration of Patent document 2, there is no description as to how to form the side surface with a shape having at least two inclined surfaces inclined in a concave shape at different angles from each other. Indeed, by providing the inclination, it becomes easier for the resin B to flow in the insert molding, but it takes time and effort to process the complicated shape providing the inclination. Further, because inclinations having two different angles are provided, it inevitably becomes difficult to reduce the thickness of the fiber reinforced resin A.

Further, in Patent document 3, described is "a configuration wherein a sandwich structure having a core material and skin materials provided on both surfaces of the core material, the core material and the skin material are composed of fiber reinforced resins each in which short fibers are randomly dispersed in a matrix resin, the content of reinforcing fibers in the core material is 20 to 80 wt%, the content of reinforcing fibers in the skin material is 30 to 80 wt%, the flexural modulus of the skin material is indispensably 10 GPa or more, and the apparent density of the core material is 0.2 to 1.2 g/cm³ or more, and preferably, the porosity of the skin material is less than 10 vol% and the porosity of the core material is 10 to 80 vol%", and disclosed is "an effect that a sandwich structure in which the permissible thickness range of the sandwich structure is widened, and which is lightweight and high-rigidity can be obtained". This pore formation is achieved by releasing the pressurization due to a heat pressing board in a state where the matrix resin for the core material is molten. By this, it is described that a core material portion in a molten state expands and is formed by spring back of the reinforcing fibers thereof (paragraph [0037]), and with respect to the strong adhesion between the core material and the skin material, it is described that it is caused by an anchor effect phenomenon in which a part of reinforcing fibers in a mat-like molded body for the core material enter into the fiber-reinforced molded body (paragraph [0041]). In this configuration of Patent document 3, however, although it is a method of obtaining a lightweight and high-rigidity sandwich structure by nipping a mat-like molded body containing reinforcing fibers and a matrix resin for the core material, which is molded by heating and pressing, and a mat containing a reinforcing fiber for a skin material and a matrix resin Shaped with mat-like molded bodies each containing reinforcing fibers and a matrix resin for the skin material, which are molded by heating and pressing, there is neither description nor suggestion with respect to joining of the sandwich structure and a separate structure.

Furthermore, a molding method using a method of exhibiting a restoring force in the shape of discontinuous fibers is disclosed. In Patent document 4, described is "a sandwich structure (III) comprising a core material (I), and a fiber reinforcing material (II) composed of continuous reinforcing fibers (A) and a matrix resin (B) arranged on both surfaces of the core material (I), wherein the core material (I) has pores", and disclosed is that "the pores are formed from discontinuous reinforcing fibers and a thermoplastic resin and formed by intersection of the filaments of the reinforcing fibers with each other", and according this configuration, disclosed is an effect that "it is possible to provide a sandwich structure excellent in lightness and thinness, and this sandwich structure can be integrated with another member". As a method for integrating the sandwich structure with another member, joining of a first member and a second member via an adhesive layer is disclosed, and described is that the thermoplastic resin forming the adhesive layer is impregnated into the reinforcing fiber bundles forming the reinforcing fiber material (II) to be integrated. In this configuration of Patent document 4, however, as a method of integrating the sandwich structure with another member, since the first member and the second member are overlapped via the adhesive layer, the thickness of the joining section becomes thicker than the surroundings. Further, there is no suggestion or the like with respect to the joining of the sandwich-like structure and a separate structure at the same thickness by providing regions having different porosities in the core layer, and forming sections different in thickness.

Further, in Patent document 5, disclosed is a molding method utilizing a shape restoring force of discontinuous fibers in a core layer. Namely, described is "a method of manufacturing a structure wherein a skin material comprising a non-expandable fiber-reinforced thermoplastic resin is disposed on at least one surface of a core layer to form a molding base material, the molding base material is heated and melted to integrate the core layer and the skin material and to make the discontinuous fibers in the core layer exhibit the shape restoring force of the core layer so as to expand the core layer so that the core layer has a predetermined low density, and thereafter, the molding base material is set in a mold and press-molded", and by this, disclosed an effect that "weight reduction of the structure can be achieved by making the core layer at a desired low density, and high mechanical properties of the structure, particularly high rigidity accompanying increase in thickness can be achieved by a state where the core layer has a desired expansion ratio and the thickness of the core layer is appropriately increased as compared with the initial thickness before expansion". In this configuration of Patent document 5, however, although a structure with high mechanical properties can be obtained by appropriately increasing the thickness of the core layer as compared with the initial thickness before expansion, the reduction of the thickness of the structure itself is limited. Further, there is no suggestion or the like with respect to joining of a sandwich-like structure and a separate structure by using the function of exhibiting the shape restoring force of the core layer.

In order to solve the problems of the conventional technologies as described above, previously, the applicant of the present invention has provided an integrally molded body which is lightweight, high-strength and high-rigidity, and has a high joining strength with a separate structure, and enables thinning, and a production method thereof (Patent document 6). In Patent document 6, provided are an integrally molded body wherein at least a part of a board end section of a sandwich structure constituted of a core layer composed of discontinuous fibers and a thermoplastic resin (A) and a skin layer composed of continuous fibers and a resin (B) is formed as a joining section, a separate structure (C) is disposed on the joining section, and which has a region in which the porosity of the core layer in a main body section other than the joining section in the sandwich structure is higher than the porosity of the core layer in the joining section, and a method of producing the same.

### Prior art documents

### Patent documents

Patent document 1: JP-A-2007-038519
Patent document 2: JP-A-2009-113244
Patent document 3: JP-A-2012-000890
Patent document 4: WO 2006/028107
Patent document 5: JP-A-2013-198984
Patent document 6: JP-A-2016-049649

### Summary of the Invention

### Problems to be solved by the Invention

However, it has been revealed that the following problems still remain, only with the technology provided by Patent document 6 described above. Namely, in particular in case where an integrally molded body shown in Fig. 4 of Patent document 6 is molded, for example, as shown in Fig. 1, a board end section of a sandwich structure 103 composed of a core layer 101 and skin layers 102 is formed as a joining section 104 and an integrally molded body 106 is molded by disposing a separate structure (C) 105 to the joining section 104, at a state where the sandwich structure 103 is formed so that the porosity of core layer 101a in main body section 107 other than joining section 104 in sandwich structure 103 is higher than the porosity of core layer 101b in the joining section 104, a resin R forming the separate structure (C) 105 to be joined is injected into the mold 108. The injected resin R is supplied to the whole of the region forming the joining section 104, and at that time, the heat of the injected resin R is transferred to the inner core layer 101 via the skin layers 102, and in a region among the core layer 101 where relatively many pores are present, the amount of shrinkage of the core layer at the time of cooling becomes large, and whereby, it has been discovered that there is a problem left wherein a defect such as deformation due to sink marks caused by the shrinkage of the core layer, particularly a depression 110, may occur on the design surface 109 side of the integrally molded body 106 to be molded.

Accordingly, paying attention particularly to the left problem in the technology provided by the above-described Patent document 6, an object of the present invention is to provide an integrally molded body wherein, while utilizing the advantage of the technology provided by the Patent document 6, when a sandwich structure and a separate structure separated therefrom are integrated, it is possible to easily mold an excellent design surface by preventing occurrence of problems such as sink marks due to heat transfer from an injected resin, and which is light-weight, high-strength and high-rigidity, and has a high joining strength with the separate structure, and which enables thinning, and a method for producing the same.

### Means for solving the Problems

To achieve the above-described object, an integrally molded body according to the present invention employs the following constitutions.
(1) An integrally molded body in which at least a part of an end section of a sandwich structure constituted of a core layer composed of discontinuous fibers and a thermoplastic resin (A) and a skin layer composed of continuous fibers and a resin (B) is formed as a joining section, and a separate structure (C) is disposed to the joining section, wherein: the sandwich structure has a stepped section at least at a part of the end section; the stepped section is constituted of a main body section forming a high surface in the stepped section, an interface section forming an interface connecting the high surface and a low surface of the stepped section, and a thinnest section having a core layer which has a porosity lower than a porosity of a core layer in the main body section; and the separate structure (C) does not contact with the interface, and is joined to only at least a part of the thinnest section.
(2) The integrally molded body according to (1), wherein the interface of the interface section has an angle of 1 to 20° with respect to an in-plane direction of the main body section.
(3) The integrally molded body according to (1) or (2), wherein a joining layer is provided at least in a part of a portion between the skin layer and the separate structure (C).
(4) The integrally molded body according to any one of (1) to (3), wherein a joining layer is provided at least in a part of a portion between the core layer and the separate structure (C).
(5) The integrally molded body according to any one of (1) to (4), wherein the porosity of the core layer in a region forming the main body section is 50% or more and 80% or less, and the porosity of the core layer in a region forming the thinnest section is 0% or more and less than 50%.
(6) The integrally molded body according to any one of (1) to (5), wherein the joining section is formed over the entire circumference of the sandwich structure.
(7) The integrally molded body according to any one of (1) to (6), wherein a length Lb of the joining section from an end surface of the sandwich structure is in a range of 3 to 30 mm.
(8) The integrally molded body according to any one of (1) to (7), wherein a thickness Db of the main body section is in a range of 0.4 to 2 mm and a thickness Tc of the joining section is in a range of 0.1 to 1.7 mm.
(9) The integrally molded body according to (8), wherein Db/Tc is in a range of 1.1 to 20.
(10) The integrally molded body according to any one of (1) to (9), wherein a distance L from an edge of the main body section at a side of the interface section to the separate structure (C) joined to only at least a part of the thinnest section is in a range of 0.1 to 30 mm.
(11) The integrally molded body according to any one of (1) to (10), wherein the sandwich structure has another stepped section at a portion other than at a part of the end section and another separate structure (C) is arranged, and the other stepped section is constituted of main body sections forming high surfaces on both sides of the other stepped section, other interface sections forming other interfaces connecting the high surfaces on both sides of the other stepped section and a low surface positioned between the high surfaces on both sides, and another thinnest section having a core layer which has a porosity lower than porosities of core layers in the main body sections on both side, and the other separate structure (C) does not contact with the other interfaces, and is joined to only at least a part of the other thinnest section.
(12) The integrally molded body according to any one of (1) to (11), wherein a thickness of the main body section and a thickness of a portion composed of only the separate structure (C) joined via the joining section are the same.
(13) The integrally molded body according to any one of (1) to (12), wherein the core layer is formed by expanding a core layer precursor composed of discontinuous fibers and the thermoplastic resin (A) in its thickness direction by spring back due to heating to form pores.
(14) The integrally molded body according to any one of (1) to (13), wherein a content of the discontinuous fibers forming the core layer is in a range of 5 to 75% by weight and a content of the thermoplastic resin (A) is in a range of 25 to 95% by weight.
(15) The integrally molded body according to any one of (1) to (14), wherein a number average fiber length of the discontinuous fibers forming the core layer is in a range of 0.5 to 50 mm.
(16) The integrally molded body according to any one of (1) to (15), wherein the discontinuous fibers forming the core layer are present at a state of fiber bundles each composed of 500 or less single fibers, and the fiber bundles are randomly oriented.
(17) The integrally molded body according to (16), wherein the discontinuous fibers forming the core layer are dispersed at a monofilament-like state, so that an average value of two-dimensional orientation angles formed by discontinuous single fibers (a) and other discontinuous single fibers (b) crossing the discontinuous single fibers (a) is in a range of 10 to 80 degrees.
   Further, a method for producing an integrally molded body according to the present invention employs the following constitutions.
(18) A method for producing an integrally molded body in which at least a part of an end section of a sandwich structure constituted of a core layer composed of discontinuous fibers and a thermoplastic resin (A) and a skin layer composed of continuous fibers and a resin (B) is formed as a joining section, and a separate structure (C) is joined to the joining section, the method comprising at least the following steps [1] to [5]:
   [1] a step of preparing a core layer precursor in which a layer of the thermoplastic resin (A) is disposed on at least one surface of a web composed of the discontinuous fibers;
   [2] a step of forming a molded body precursor by disposing a skin layer precursor impregnated with the resin (B) into the continuous fibers on each of both surfaces of the core layer precursor;
   [3] a step of heat-press molding the molded body precursor to solidify or cure the skin layer precursor to form a skin layer and to integrate the core layer precursor and the skin layer;
   [4] a step of forming the sandwich structure wherein, when expanding the sandwich structure to a predetermined thickness by exhibiting a restoring force of the discontinuous fibers in the core layer precursor and forming pores in the core layer, by bringing a press mold into contact with the sandwich structure, a stepped section is formed at least at a part of an end section of the sandwich structure, and the stepped section is constituted so as to have a main body section forming a high surface in the stepped section, an interface section forming an interface connecting the high surface and a low surface of the stepped section, and a thinnest section having a core layer which has a porosity lower than a porosity of a core layer in the main body section; and
   [5] a step of joining and integrating the sandwich structure and the separate structure (C) by disposing the formed sandwich structure in a mold, and by injecting a molten resin of the separate structure (C) with respect to the joining section in the mold so that the molten resin does not contact with the interface but contacts with only at least a part of the thinnest section, at a state in which the flow of the resin is stopped at a middle portion in the mold.
(19) The method for producing an integrally molded body according to (18), wherein, in the step [4] of forming the sandwich structure, after the core layer precursor containing the discontinuous fibers and the thermoplastic resin (A) is heated and pressurized to a temperature higher than a softening point or melting point of the thermoplastic resin (A), the pores are formed by releasing the pressurization and expanding the core layer precursor by spring back.
(20) The method for producing an integrally molded body according to (18) or (19), wherein, in the step [2] of forming the molded body precursor, a skin layer precursor disposed with a skin layer only to a region corresponding to a main body section in at least one surface of the core layer is formed, the skin layer precursor is solidified or cured by heat pressing to form a skin layer, and the main body section having the core layer having pores is formed by expanding to a predetermined thickness.
(21) The method for producing an integrally molded body according to any one of (18) to (20), wherein the sandwich structure and the separate structure (C) are joined and integrated with each other, by disposing a thermoplastic resin film or nonwoven fabric or applying an adhesive on the skin layer or core layer forming the joining section and then injection molding the molten resin of the separate structure (C).

### Effect according to the Invention

According to the integrally molded body and the production method thereof according to the present invention, by forming the configuration wherein the stepped section is provided by forming portions different in thickness and in porosity of core layer in the end section of the sandwich structure, and the separate structure (C) is joined to a part of the stepped section, it is possible to form a thin integrally molded body, and to achieve light weight, high strength · high rigidity and a high joining strength with the separate structure, and at the same time, by forming the configuration wherein the stepped section is constituted of the main body section, the interface section and the thinnest section, and the separate structure (C) does not contact with the interface, and is joined to only at least a part of the thinnest section, the heat transfer from the resin forming the separate structure (C) to the interface section can be substantially prevented, and the fear of occurrence of the defect on the design surface side originating from sink marks caused by the heat transfer or the like can be removed, and it is possible to obtain a desired integrally molded body more reliably and easily.

### Brief explanation of the drawings

[Fig. 1] Fig. 1 is a schematic partial sectional view at the time of molding an integrally molded body, showing the problems left in Patent document 6.
[Fig. 2] Fig. 2 is a schematic perspective view of an integrally molded body according to an embodiment of the present invention.
[Fig. 3] Fig. 3 is a schematic sectional view in the thickness direction of the integrally molded body as viewed along line A-A' of Fig. 2.
[Fig. 4] Fig. 4 is a schematic partial sectional view showing one step of a method for producing an integrally molded body according to an embodiment of the present invention in contrast with Fig. 1.
[Fig. 5] Fig. 5 is a schematic sectional view in the thickness direction of an integrally molded body for explaining a part of parameters in the present invention.
[Fig. 6] Fig. 6 is a schematic sectional view in the thickness direction of an integrally molded body according to another embodiment of the present invention.
[Fig. 7] Fig. 7 is a schematic sectional view of a case where a joining layer is provided to a skin layer of an integrally molded body according to an embodiment of the present invention.
[Fig. 8] Fig. 8 is a schematic sectional view of a case where a stepped section and a joining layer are provided on each of the upper and lower surfaces of an integrally molded body according to an embodiment of the present invention.
[Fig. 9] Fig. 9 is a schematic diagram showing a dispersion state of discontinuous fibers forming a core layer used in the present invention.
[Fig. 10] Fig. 10 is a schematic diagram showing an example of a method for producing an integrally molded body according to an embodiment of the present invention.
[Fig. 11] Fig. 11 is a schematic sectional view in the thickness direction of an integrally molded body showing an example of a case where another stepped section and another separate structure (C) are provided at a portion other than an end section of a sandwich structure in the present invention.
[Fig. 12] Fig. 12 is a schematic sectional view in the thickness direction of an integrally molded body showing another example of a case where another stepped section and another separate structure (C) are provided at a portion other than an end section of a sandwich structure in the present invention..

### Embodiments for carrying out the Invention

Hereinafter, embodiments of the present invention will be explained in detail with reference to the drawings. Where, it should be noted that the present invention is not limited by these drawings at all.

An integrally molded body according to the present invention is an integrally molded body in which at least a part of an end section of a sandwich structure constituted of a core layer composed of discontinuous fibers and a thermoplastic resin (A) and a skin layer composed of continuous fibers and a resin (B) is formed as a joining section, and a separate structure (C) is disposed to the joining section, wherein: the sandwich structure has a stepped section at least at a part of the end section; the stepped section is constituted of a main body section forming a high surface in the stepped section, an interface section forming an interface connecting the high surface and a low surface of the stepped section, and a thinnest section having a core layer which has a porosity lower than a porosity of a core layer in the main body section; and the separate structure (C) does not contact with the interface, and is joined to only at least a part of the thinnest section.

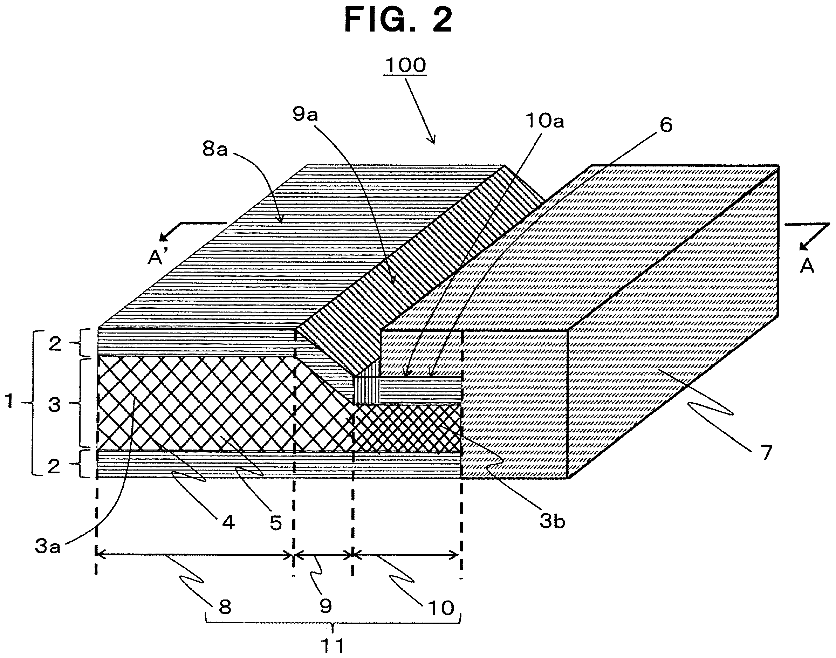

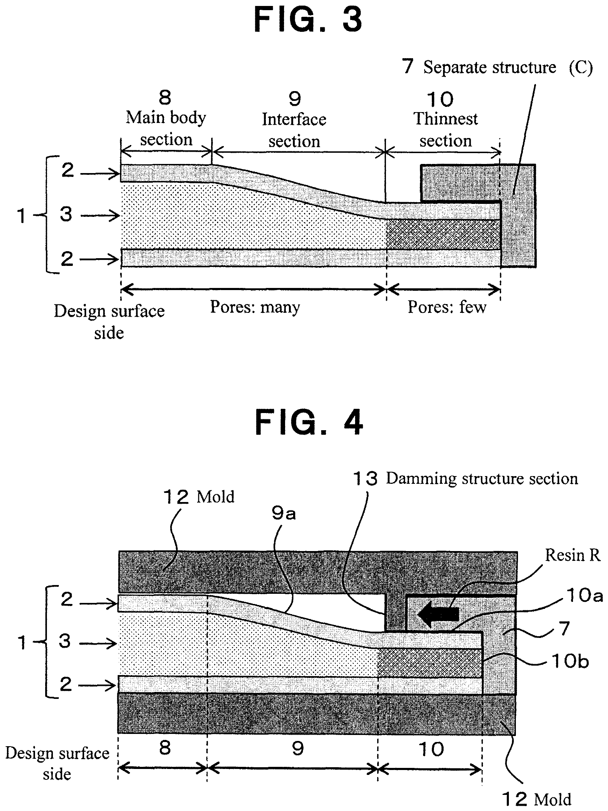

Fig. 2 shows an integrally molded body according to an embodiment of the present invention, and Fig. 3 shows a schematic section in the thickness direction of the integrally molded body as viewed along the line A-A' of Fig. 2. In a sandwich structure 1 composed of a core layer 3 and skin layers 2 in Fig. 2, the core layer 3 is composed of discontinuous fibers 4 and a thermoplastic resin (A) of a matrix resin, and pores 5 with a certain size are formed in the core layer 3. A joining section 6 is provided in at least a part of the end section of the sandwich structure 1, and to the joining section 6, a resin (C) forming a separate structure (C) 7 (for convenience, the matrix resin forming the core layer is also referred to as thermoplastic resin (A), the matrix resin forming the skin layer is also referred to as resin (B), and the matrix resin forming the separate structure (C) is also referred to as resin (C)) is injection molded and joined, whereby an integrally molded body 100 is formed. A stepped section 11 is provided on at least a part of the end section of the sandwich structure 1, and the stepped section 11 is constituted of a main body section 8 forming a high surface 8a in the stepped section 11, an interface section 9 forming an interface 9a connecting the high surface 8a and a low surface 10a of the stepped section 11 and a thinnest section 10 having a core layer 3b with a porosity lower than the porosity of the core layer 3a in the main body section 8. The separate structure (C) 7 does not contact with the interface 9a, but is joined to at least a part of the thinnest section 10. In this integrally molded body 100, first, as compared with a case where a separate structure (C) is joined to the flat portion on the side surface of the sandwich structure, the joining area can be widened and an effect of enhancing the joining strength can be obtained.

In the integrally molded body 100 according to this embodiment, as shown also in Fig. 3, the separate structure (C) 7 is joined to only at least a part of the thinnest section 10 having the core layer 3b having a lower porosity (including a case with no pores) than that of the core layer 3a in the main body section 8, and the lower surface side of Fig. 3 is formed as a design surface. The above-described joining section 6 may be provided over the entire circumference of the sandwich structure 1 or may be provided only in a necessary part in the circumferential direction of the sandwich structure 1. It may be decided according to the use of the integrally molded body 100.

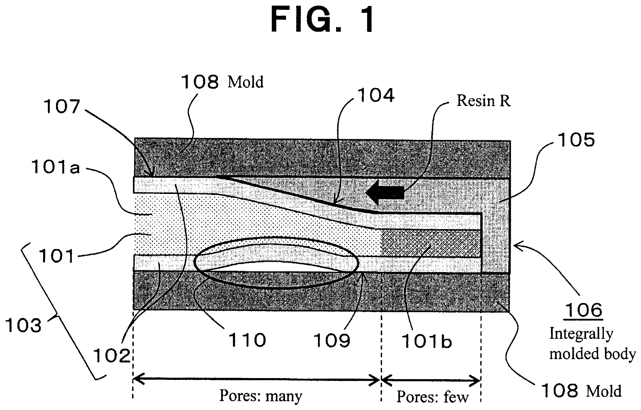

Although the details of the production method will be described later, the structure in in the integrally molded body 100 in which the separate structure (C) 7 does not contact with the interface 9a and is joined to only at least a part of the thinnest section 10 is formed, for example, as shown in Fig. 4 which is shown in comparison with Fig. 1. The shaped sandwich structure 1 formed as shown in Fig. 3 is placed in a mold 12, and the resin (C) forming the separate structure (C) 7 is injected into the mold 12, whereas a damming structure section 13 for damming the resin R being injected, so as to be joined with the side surface 10b and only a part of the upper surface 10a (a part on the end section side) of the thinnest section 10 and so as not to contact with the interface 9a, is disposed in the inner surface side of the mold 12 at a state integrally with or separately from the mold 12. Thus, by such a manner that the resin R is injected so as to be joined to only a part of the thinnest section 10, such a problem as shown in Fig. 1, in which the heat of the injected resin R is transferred to the core layer in the interface section 9 or the main body section 8, the amount of shrinkage of the core layer at cooling becomes great in the region where relatively many pores are present in the core layer 3, and whereby on the design surface side of the integrally molded body to be molded, a defect originating from the deformation due to sink marks caused by the shrinkage of the core layer may occur, can be solved, and a desired design surface can be reliably obtained. Namely, while the separate structure (C) 7 is joined with a high joining strength, an integrally molded body 100 which can be thin and lightweight, which does not cause defects on the design surface side, can be obtained. In the thinnest section 10, the porosity of the core layer is lowered to increase the strength and the thinnest section 10 is thinned, so it is also possible to make the thickness of the separate structure (C) 7 equal to the thickness of the main body section 8, that is, a structure can be achieved wherein the thickness of main body section 8 and the thickness of the portion composed of only the separate structure (C) 7 joined via the joining section 6 are set so as to have the same thickness, and it becomes possible to make the thickness of the integrally molded body 100 uniform over the whole thereof. Alternatively, it also becomes possible to have a thickness and shape within a predetermined range for the entire integrally molded body 100 including the separate structure (C) 7. As a result, the entire integrally molded body 100 can be made thin and light.

It is preferred that the porosity of the core layer 3 in the region forming the main body section 8 in the integrally molded body 100 as described above is 50% or more and 80% or less, and the porosity of the core layer 3 in the region forming the thinnest section 10 is 0% or more and less than 50%. By providing a certain amount of pores in the core layer and changing the porosity, it is possible to form a desired thickness. The porosity of the core layer 3 in the region forming the main body section 8 is preferably 52 to 78%, more preferably 58 to 75%, further preferably 60 to 70%. If the porosity is less than 50%, a certain height in the main body section 8 cannot be secured, and the effect of enhancing the joining strength between the sandwich structure 1 and the separate structure (C) 7 may be weakened. If the porosity is larger than 80%, the strength of the sandwich structure 1 may be insufficient. Further, the porosity of the core layer 3 in the region forming the thinnest section 10 is preferably 0 to 45%, more preferably 0 to 40%, further preferably 0 to 35%. If the porosity is 50% or more, it is impossible to secure a certain difference in height as compared with the main body section 8, and the effect of enhancing the joining strength between the sandwich structure 1 and the separate structure (C) may be weakened.

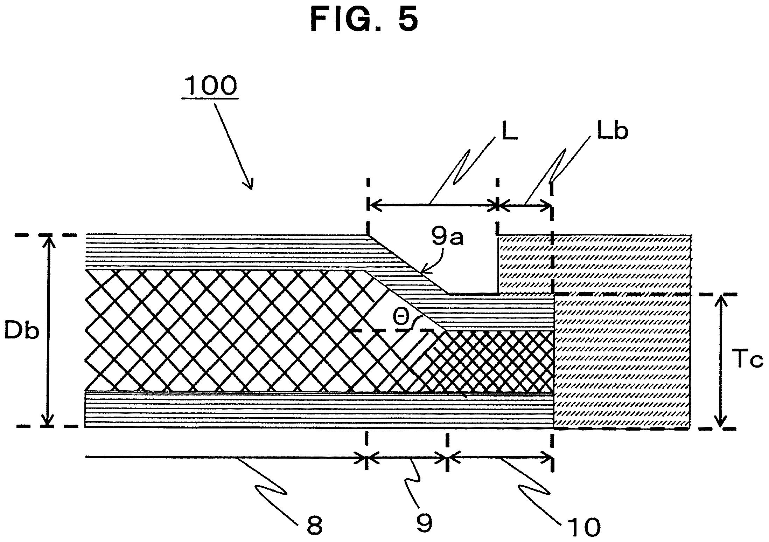

It is preferred that a parameter related to each shape in the integrally molded body 100 as described above is set as follows. Each shape parameter is shown in Fig. 5, and first, it is preferred that the interface 9a of the interface section 9 has an angle θ of 1 to 20° with respect to the in-plane direction of the main body section 8. Where, in case where the angle θ is 90°, the interface 9a of the interface section 9 stands up vertically from the thinnest section 10, but as described later, the present invention is also established in such a case. The angle θ (°) is more preferably 2 to 10°, and further preferably 3 to 8°.

Further, it is preferred that the length Lb of the joining section 6 from the end surface of the sandwich structure 1 is in a range of 3 to 30mm. By making the length Lb within a specified range, it becomes possible to increase the strength and thinning of the sandwich structure 1 and enhance the joining strength with the separate structure (C) 7. If Lb is less than 3 mm, the joining strength with the separate structure (C) 7 may be weakened. If it exceeds 30mm, the region occupied by the main body section 8 of the sandwich structure 1 may be reduced too much, and the rigidity of the sandwich structure 1 itself may decrease.

Further, it is preferred that the thickness Db of the main body section 8 of the sandwich structure 1 is in a range of 0.4 to 2 mm and the thickness Tc of the joining section 6 is in a range of 0.1 to 1.7mm. Furthermore, in the relationship between Db and Tc, it is preferred that Db/Tc is in a range of 1.1 to 20. If Db is less than 0.4 mm or Db/Tc is less than 1.1, the joining strength between the sandwich structure 1 and the separate structure (C) 7 may be weakened. In case where Db exceeds 2mm or Db/Tc exceeds 20, thinning of the sandwich structure 1 may be obstructed.

Furthermore, it is preferred that the distance L from the edge of interface section 9 side of the main body section 8 to the separate structure (C) 7 joined to only at least a part of the thinnest section 10 is in a range of 0.1 to 30mm. If the distance L is less than 0.1 mm, it is difficult to secure a non-contact state with the interface section 9 of the separate structure (C) 7, and if the distance L exceeds 30mm, the space portion to be formed between the separate structure (C) 7 and the main body section 8 becomes too long, and there is a possibility that an inconvenience may occur on the application of the integrally molded body 100.

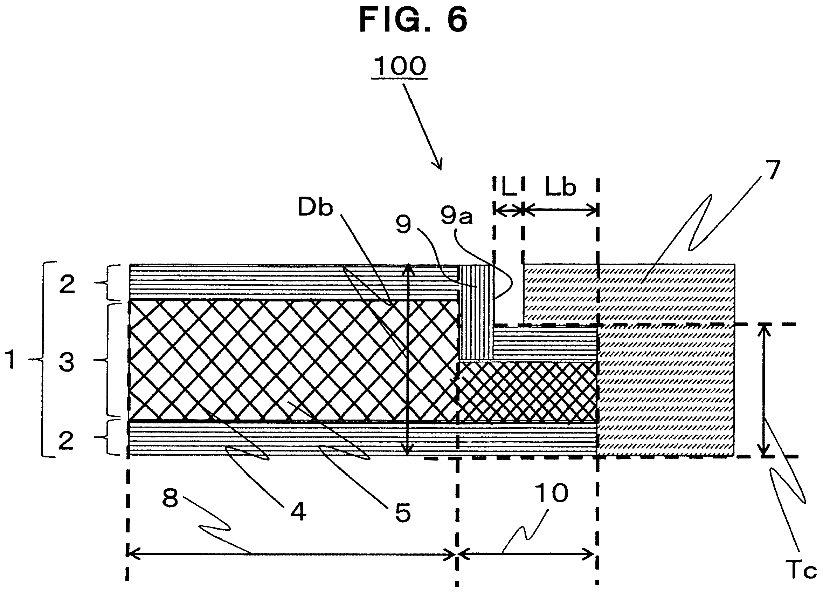

In the integrally molded body according to the present invention, for example, as shown in Fig. 6, the angle θ of the interface 9a of the interface section 9 with respect to the in-plane direction of the main body section 8 can also be set at 90°, and in such a case, although a region forming the interface section 9 does not substantially appear, the non-contact state with respect to the interface section 9 of the separate structure (C) 7 is secured as shown. Parameters relating to each shape other than the angle θ in this case are shown in Fig. 6 using the same symbols as those used in Fig. 5.

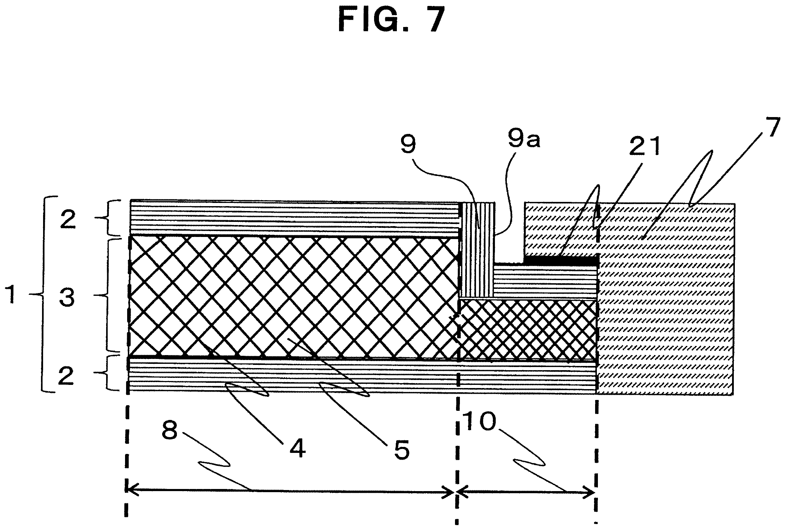

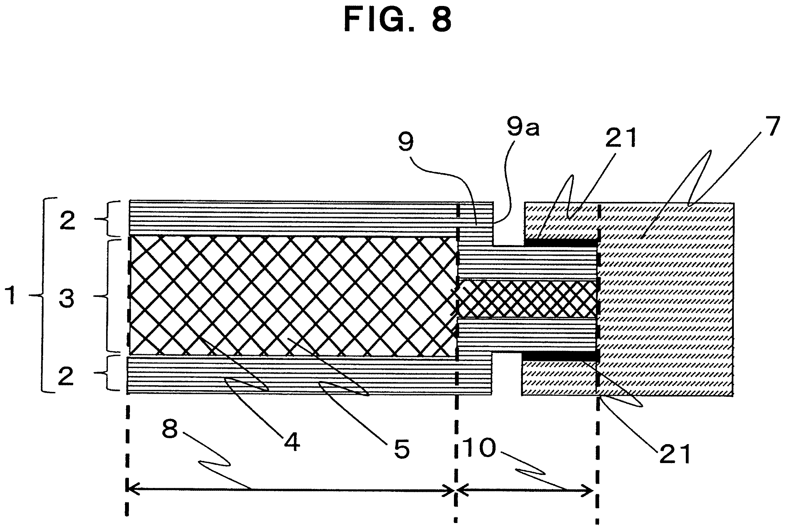

Further, in the present invention, for example, as shown in Fig. 7, a joining layer 21 can be provided at least at a part of a portion between the skin layer 2 and the separate structure (C) 7 or/and between the core layer 3 and the separate structure (C) 7. Fig. 7 shows a case where the joining layer is provided on the skin layer 2, and exemplifies a case where the above-described angle of the interface 9a of the interface section 9 with respect to the in-plane direction of the main body section 8 is set at 90°. It is a constitution wherein the joining layer 21 is provided in advance on the skin layer 2 forming the joining section 6, and thereafter, the separate structure (C) 7 is formed. Further, as shown in Fig. 8, stepped sections and joining layers 21 can also be provided on skin layers 2 on the upper and lower surfaces. By these configurations, the joining strength between the skin layer 2 and the separate structure (C) 7 can be enhanced.

Here, as the joining layer 21, an adhesive such as an acrylic type, an epoxy type, a styrene type, a nylon type, an ester type, a thermoplastic resin film, a nonwoven fabric or the like can be used. Further, in order to further improve the adhesiveness, it is preferred to provide a thermoplastic resin layer as a joining layer to the outermost layer of the skin layer 2 or the core layer 3. If the joining layer 21 provided to the outermost layer of the skin layer 2 or the core layer 3 is made of the same material as that of the separate structure (C) 7, it is also possible to enhance the joining strength. The resin provided to the outermost layer of the skin layer 2 or the core layer 3 is not limited to the same resin as the adhesive used in the joining layer, and is not particularly limited as long as it has a good compatibility, and it is preferred to select an optimum one depending upon the type of the resin forming the separate structure (C) 7.

In the present invention, the continuous fibers used for the skin layer 2 means continuous reinforcing fibers extending over at least 150mm in length, preferably 200mm or more in at least one direction. Namely, the discontinuous fibers used in the present invention means fibers having a length of less than 150mm.

In the present invention, the discontinuous fibers used for the core layer 3 are not particularly limited, and for example, exemplified are metal fibers such as aluminum, brass and stainless steel, carbon fibers of polyacrylonitrile (PAN) type, rayon type, lignin type and pitch type, graphite fibers, insulating fibers such as glass fibers, organic fibers such as aramid resin, polyphenylene sulfide resin, polyester resin, acrylic resin, nylon resin and polyethylene resin, and inorganic fibers such as silicon carbide and silicon nitride. Further, these fibers may be subjected to a surface treatment. As the surface treatment, in addition to adhesion treatment of a metal as a conductor, treatment with a coupling agent, treatment with a sizing agent, treatment with a binding agent, adhesion treatment of additives and the like are available. In addition, one type of reinforcing fibers may be used alone, or two or more types may be used in combination. Among them, from the viewpoint of weight reduction effect, carbon fibers of PAN type, pitch type, rayon type and the like excellent in specific strength and specific rigidity are preferably used. Further, from the viewpoint of enhancing the economic efficiency of an obtained molded article, glass fibers are preferably used, and in particular, it is preferred to use carbon fibers and glass fibers in combination from the viewpoint of balance between mechanical properties and economic efficiency. Further, from the viewpoint of enhancing the impact absorption and forming property of an obtained molded article, aramid fibers are preferably used, and in particular, it is preferred to use carbon fibers and aramid fibers in combination from the viewpoint of the balance between mechanical properties and impact absorption properties. Further, from the viewpoint of enhancing the conductivity of an obtained molded article, it is also possible to use reinforcing fibers coated with a metal such as nickel, copper, ytterbium or the like. Among these, PAN-based carbon fibers excellent in mechanical properties such as strength and elastic modulus can be used more preferably.

Further, in the present invention, the type of thermoplastic resin (A) used for the core layer 3 is not particularly limited, and any resin of thermoplastic resins exemplified below can be used. For example, exemplified are polyester resins such as polyethylene terephthalate (PET) resin, polybutylene terephthalate (PBT) resin, polytrimethylene terephthalate (PTT) resin, polyethylene naphthalate (PEN) resin and liquid crystal polyester resin, polyolefin resins such as polyethylene (PE) resin, polypropylene (PP) resin and polybutylene resin, polyoxymethylene (POM) resins, polyamide (PA) resins, polyarylene sulfide resins such as polyphenylene sulfide (PPS) resin, polyketone (PK) resins, polyether ketone (PEK) resins, polyether ether ketone (PEEK) resins, polyetherketoneketone (PEKK) resins, polyether nitrile (PEN) resins, fluorine-based resins such as polytetrafluoroethylene resins, crystalline resins such as liquid crystal polymers (LCP), styrene-based resins, in addition, polycarbonate (PC) resins, polymethyl methacrylate (PMMA) resins, polyvinyl chloride (PVC) resins, polyphenylene ether (PPE) resins, polyimide (PI) resins, polyamideimide (PAI) resins, polyetherimide (PEI) resins, polysulfone (PSU) resins, polyethersulfone resins, amorphous resins such as polyarylate (PAR) resins, and in addition, phenolic-based resins, phenoxy-based resins, and further, thermoplastic elastomers of polystyrene-based resins, polyolefin-based resins, polyurethane-based resins, polyester-based resins, polyamide-based resin, polybutadiene-based resins, polyisoprene-based resins, fluorine-based resins, acrylonitrile-based resin, etc., and thermoplastic resins selected from copolymers and modified products thereof. Among them, a polyolefin resin is preferable from the viewpoint of light weight of an obtained molded article, and from the viewpoint of strength, a polyamide resin is preferable, and from the viewpoint of surface appearance, a polycarbonate resin, a styrene-based resin, and an amorphous resin such as a modified polyphenylene ether-based resin, and from the viewpoint of heat resistance, a polyarylene sulfide resin is preferable, and from the viewpoint of continuously used temperature, a polyether ether ketone resin is preferably used.

The exemplified thermoplastic resin may contain an impact resistance improver such as an elastomer or a rubber component, other fillers and additives, as long as the object of the present invention is not impaired. As examples of these, exemplified are inorganic fillers, flame retardants, conductivity imparting agents, crystal nucleating agents, ultraviolet absorbers, antioxidants, vibration damping agents, antibacterial agents, insect repellents, deodorants, coloring inhibitors, thermal stabilizers, release agents, antistatic agents, plasticizers, lubricants, colorants, pigments, dyes, foaming agents, foam inhibitors, or coupling agents.

In the present invention, as the continuous fibers used for the skin layer 2, for example, reinforcing fibers of the same type as the aforementioned discontinuous fibers used in the core layer 3 can be used.

Further, from the viewpoint of the rigidity of the sandwich structure, the continuous fibers having a tensile modulus preferably in a range of 360 to 1000 GPa, more preferably in a range of 500 to 800 GPa can be used. In case where the tensile modulus of the reinforcing fibers is less than 360 GPa, the rigidity of the sandwich structure may be poor, and in case where it is more than 1000 GPa, it is necessary to increase the crystallinity of reinforcing fibers and it becomes difficult to produce reinforcing fibers. When the tensile modulus of the reinforcing fibers is within the above-described range, it is preferable from the viewpoint of further improving the rigidity of the sandwich structure and improving the productivity of the reinforcing fibers. Where, the tensile modulus of the reinforcing fibers can be determined by the strand tensile test described in JIS R 7601-1986.

In the present invention, the resin (B) used for the skin layer 2 is not particularly restricted, and a thermoplastic resin or a thermosetting resin can be used. In case of thermoplastic resin, for example, a same kind of resin as the aforementioned thermoplastic resin (A) used in the core layer 3 can be used. Further, as examples of thermosetting resin, thermosetting resins such as unsaturated polyester resin, vinyl ester resin, epoxy resin, phenol (resol type) resin, urea-melamine resin, polyimide resin, maleimide resin, benzoxazine resin and the like can be preferably used. A resin prepared by blending two or more of these may be applied. Among them, an epoxy resin is particularly preferable from the viewpoint of the mechanical properties and heat resistance of a molded body. In order to exhibit its excellent mechanical properties, the epoxy resin is preferably contained as a main component of the resin to be used, specifically, it is preferably contained in an amount of 60% by weight or more per resin composition.

In the present invention, the resin used for the separate structure (C) is not particularly restricted, and the aforementioned thermoplastic resins or thermosetting resins can be used. In particular, from the viewpoints of heat resistance and chemical resistance, a PPS resin is more preferably used, from the viewpoints of molded article appearance and dimensional stability, a polycarbonate resin or a styrene-based resin is more preferably used, and from the viewpoint of strength and impact resistance of a molded article, polyamide resin is more preferably used.

Further, it is also preferred to contain reinforcing fibers as the resin (C) used for the separate structure (C) in order to make the integrally molded body high-strength and high-rigidity. As the reinforcing fibers, for example, can be used metal fibers such as aluminum fibers, brass fibers and stainless steel fibers, inorganic fibers such as carbon fibers such as polyacrylonitrile type, rayon type, lignin type, pitch type and the like, graphite fibers, glass fibers, silicon carbide fibers, silicon nitride fibers, and organic fibers such as aramid fibers, polyparaphenylene benzobisoxazole (PBO) fibers, polyphenylene sulfide fibers, polyester fibers, acrylic fibers, nylon fibers and polyethylene fibers. These reinforcing fibers may be used solely or in combination of two or more kinds. Among these, from the viewpoint of balancing the specific strength, the specific rigidity and the light weight, carbon fibers are preferable, and from the viewpoint of excellent specific strength and specific elastic modulus, it is preferred to include at least polyacrylonitrile-based carbon fibers.

Furthermore, the resin (C) forming the separate structure (C) may contain other fillers and additives within ranges not damaging the object of the present invention depending upon required properties. For example, exemplified are inorganic fillers, flame retardants other than phosphorus type, conductivity imparting agents, crystal nucleating agents, ultraviolet absorbers, antioxidants, vibration damping agents, antibacterial agents, insect repellents, deodorants, coloring inhibitors, thermal stabilizers, release agents, antistatic agents, plasticizers, lubricants, colorants, pigments, dyes, foaming agents, foam inhibitors, coupling agents and the like.

Further, in the present invention, it is preferred that the sandwich structure 1 has a rectangular parallelepiped shape having a side surface area smaller than a bottom area. For example, in a so-called thin-walled rectangular parallelepiped shape having a side surface area smaller than a bottom area as in case of a casing of a personal computer, the area of the side surface portion is narrow and a strong joining strength is required to join a separate structure to that portion. Even in such a form, by employing the joining structure or the joining method described later according to the present invention, it is possible to join the separate structure with a high strength even with a joining section having a small area.

Further, in the present invention, it is preferred that the core layer 3 is formed by expanding a core layer precursor composed of discontinuous fibers and the thermoplastic resin (A) in its thickness direction by spring back due to heating to form pores. After heating and pressurizing the molded body containing the discontinuous fibers and the thermoplastic resin (A) forming the core layer 3 to a temperature higher than the softening point or melting point of the resin, the pressure is released, and by expanding by the restoring force to be returned to the original form when the residual stress of the discontinuous fibers is released, so-called spring back, desired pores can be formed in the core layer 3. In the restoration stage, if the restoring action is suppressed by a certain pressurizing means or the like at a part of the region, the porosity can be suppressed low.

Further, in the present invention, it is preferred that the content of the discontinuous fibers forming the core layer 3 is 5 to 75% by mass and the content of the thermoplastic resin (A) is 25 to 95% by mass.

In the formation of the core layer 3, the compounding ratio of the discontinuous fibers and the thermoplastic resin (A) is one factor specifying porosity. Although there are no particular restrictions on how to determine the compounding ratio of the discontinuous fibers and the thermoplastic resin (A), for example, it is possible to determine it by removing the resin component contained in the core layer 3 and measuring the weight of only discontinuous fibers remaining. As a method for removing the resin component contained in the core layer 3, a dissolving method, a burning-off method or the like can be exemplified. For weight measurement, it can be measured using an electronic weighing device or an electronic balance. It is possible to set the size of the molding material to be measured at 100 mm × 100 mm square and the measurement times at n = 3, and to use the average value thereof. The compounding ratio of the core layer 3 is preferably 7 to 70% by mass of discontinuous fibers and 30 to 93% by mass of thermoplastic resin (A), more preferably 20 to 50% by mass of discontinuous fibers and 50 to 80% by mass of thermoplastic resin (A), and further preferably 25 to 40% by mass of discontinuous fibers and 60 to 75% by mass of thermoplastic resin (A). If the discontinuous fibers are less than 5% by mass and the thermoplastic resin (A) is more than 95% by mass, because spring back is unlikely to occur, the porosity cannot be increased, and it may become difficult to provide regions having different porosities in the core layer 3, and as a result, the joining strength with the separate structure (C) 7 also decreases. On the other hand, if the discontinuous fibers are more than 75% by mass and the thermoplastic resin (A) is less than 25% by mass, the specific rigidity of the sandwich structure 1 decreases.

Further, in the present invention, it is preferred that the number average fiber length of the discontinuous fibers forming the core layer is 0.5 to 50 mm.

By setting the number average fiber length of the discontinuous fibers at a specific length, the generation of pores by the spring back of the core layer can be ensured. The number average fiber length is preferably 0.8 to 40 mm, more preferably 1.5 to 20 mm, further preferably 3 to 10 mm. If the number average fiber length is shorter than 0.5 mm, it may be difficult to form pores having a certain size or more. On the other hand, if the number average fiber length is longer than 50 mm, because it becomes difficult that the fiber bundles are randomly dispersed and the core layer 3 can produce a sufficient spring back, the size of the pores becomes limited and the joining strength with the separate structure (C) 7 decreases.

As a method for measuring the fiber length of discontinuous fibers, for example, there is a method of directly extracting discontinuous fibers from a group of discontinuous fibers and measuring them by microscopic observation. In case where a resin is adhered to the group of discontinuous fibers, there is a method of dissolving the resin from the group of discontinuous fibers using a solvent that dissolves only the resin contained therein, filtering out remaining discontinuous fibers and measuring them by microscopic observation (dissolution method), and in case where there is no solvent dissolving the resin, there is a method of burning off only the resin in a temperature range where discontinuous fibers are not oxidized and reduced, classifying discontinuous fibers and measuring them by microscopic observation (burning-off method), or the like. It is possible to randomly select 400 discontinuous fibers from the group of discontinuous fibers, measure the lengths thereof up to a level of 1 µm unit with an optical microscope and determine the fiber length and its ratio. Where, in case of comparing the method of directly extracting discontinuous fibers from the group of discontinuous fibers with the method of extracting discontinuous fibers by the burning-off method or the dissolution method, by selecting the conditions appropriately, a special difference does not occur in the obtained result therebetween. Among these measurement methods, it is preferred to employ the dissolution method from the viewpoint that the weight change of discontinuous fibers is small.

Further, in the present invention, it is preferred that the discontinuous fibers forming the core layer are present at a state of fiber bundles each composed of 500 or less single fibers, and the fiber bundles are randomly oriented.

Further, in the present invention, it is preferred that the discontinuous fibers forming the core layer are dispersed at a monofilament-like state, and an average value of two-dimensional orientation angles formed by discontinuous single fibers (a) and other discontinuous single fibers (b) crossing the discontinuous single fibers (a) is in a range of 10 to 80 degrees.

By the condition where the discontinuous fibers are present in the form of fiber bundles of 500 single fibers or less and the fiber bundles are randomly oriented, because the discontinuous fibers forming the core layer can exist in an intersecting manner, a large spring back can be obtained, and pores of a certain size or more can be formed. Here, "being dispersed at a monofilament-like state" means that with respect to discontinuous fibers arbitrarily selected in the core layer of the sandwich structure, the proportion of single fibers having a two-dimensional contact angle of 1 degree or more (hereinafter, also referred to as "fiber dispersion rate") is 80% or more, and in other words, it means that in the constituent elements, bundles each in which two or more single fibers are contact with each other and parallel are less than 20%. Therefore, here, only those whose weight fraction of fiber bundles with 100 filaments or less in the core layer composed of at least discontinuous fibers corresponds to 100% are targeted.

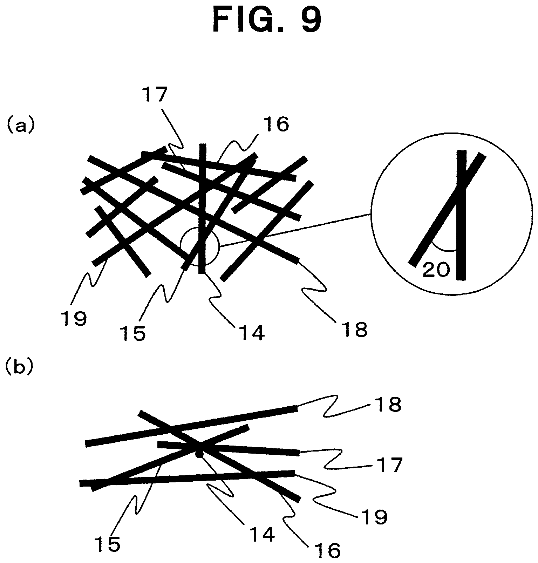

Here, the two-dimensional contact angle is an angle formed by discontinuous single fibers and other discontinuous single fibers contacting the discontinuous single fibers, and among angles formed by ,the discontinuous single fibers contacting each other, it is defined as an angle of acute angle side of 0 degrees or more and 90 degrees or less. The two-dimensional contact angle will be further explained using the drawings. Figs. 9 (a) and (b) show an embodiment of the present invention, which are schematic views when discontinuous fibers in the core layer of a sandwich structure are observed from the plane direction (a) and the thickness direction (b). When a discontinuous single fiber 14 is referred to as a reference, the discontinuous single fiber 14 is observed intersecting discontinuous single fibers 15 to 19 in Fig. 9(a), whereas the discontinuous single fiber 14 does not contact with discontinuous single fibers 18 and 19 in Fig. 9(b). In this case, with respect to the discontinuous single fiber 14 as a reference, the evaluation targets of the two-dimensional contact angle are discontinuous single fibers 15 to 17, and the two-dimensional contact angle is an angle 20 of an acute angle side of 0° or more and 90° or less among two angles formed by two discontinuous single fibers contacted with each other.

Although there is no particular restriction on the method of measuring the two-dimensional contact angle, for example, a method of observing the orientation of discontinuous fibers from the surface of the core layer 3 of the sandwich structure 1 can be exemplified. In this case, polishing the surface of the sandwich structure 1 to expose the discontinuous fibers of the core layer 3 makes it easier to observe the discontinuous fibers. Further, a method of photographing an orientation image of the discontinuous fibers through X-ray CT transmission observation can also be exemplified. In case of discontinuous fibers with high X-ray transmissibility, it is preferable to mix fibers for tracer fibers with discontinuous fibers, or to apply a chemical for tracer to discontinuous fibers, because it becomes easy to observe the discontinuous fibers. Further, in case where it is difficult to measure by the above-described methods, a method can be exemplified wherein, after separating the core layer 3 from the sandwich structure 1, the core layer 3 is placed under a high temperature by a heating furnace or the like to burn out the thermoplastic resin component, and then, from a mat composed of discontinuous fibers taken out, the orientation of discontinuous fibers is observed using an optical microscope or an electron microscope. Based on the above-described observation method, the fiber dispersion rate is measured by the following procedure. With respect to a randomly selected discontinuous single fiber (discontinuous single fiber 14 in Fig. 9), the two-dimensional contact angles thereof formed by all discontinuous single fibers (discontinuous single fibers 15 to 17 in Fig. 9) in contact therewith are measured. This is carried out for 100 discontinuous single fibers, and the rate is calculated from the ratio of the total number of all discontinuous single fibers for which the two-dimensional contact angles have been measured, and the number of discontinuous single fibers having a two-dimensional contact angle of 1 degree or more.

Further, it is particularly preferred that the discontinuous fibers forming the core layer 3 are randomly dispersed. Here, that discontinuous fibers are randomly dispersed means that the average value of the two-dimensional orientation angles of arbitrarily selected reinforcing fibers in the sandwich structure 1 is 30 to 60 degrees. Such a two-dimensional orientation angle is an angle formed by a discontinuous single fiber and another discontinuous single fiber intersecting the discontinuous single fiber, and is defined as an angle on the acute angle side of 0 degree or more and 90 degrees or less among the angles formed the discontinuous single fibers intersected with each other. This two-dimensional orientation angle will be further explained using the drawings. In Figs. 9 (a) and (b), when the discontinuous single fiber 14 is referred to as a reference, the discontinuous single fiber 14 intersects with other discontinuous single fibers 15 to 19. Here, the intersection means a state in which discontinuous single fiber as a reference is observed crossing other discontinuous single fibers in a two-dimensional plane to be observed, and the discontinuous single fiber 14 is not necessarily required to be contacted with the discontinuous single fibers 15 to 19, and a state observed to be intersected at a projected condition also is not an exception. Namely, when observing the reference discontinuous single fiber 14 which is a reference, all of the discontinuous single fibers 15 to 19 are objects to be evaluated for the two-dimensional orientation angle, and in Fig. 9(a), the two-dimensional orientation angle is the angle 20 which is an angle of acute angle side of 0 degrees or more and 90 degrees or less, among the two angles formed by two discontinuous single fibers intersecting with each other.

Although there is no particular restriction on the method of measuring the two-dimensional orientation angle, for example, a method of observing the orientation of discontinuous fibers from the surface of the constituent element can be exemplified, and the same means as the above-described method of measuring the two-dimensional contact angle can be employed. The average value of the two-dimensional orientation angles is determined by the following procedure. The average value of the two-dimensional orientation angles of all discontinuous single fibers intersecting with a discontinuous single fiber (discontinuous single fibers 15 to 19 in Fig. 9) with the randomly selected discontinuous single fiber (discontinuous single fiber 14 in Fig. 9) is determined. For example, in case where there are many other discontinuous single fibers intersecting with a certain discontinuous single fiber, it may be employed to randomly select 20 of the other intersecting discontinuous single fibers and to substitute an average value of the measured values thereof. The measurement is repeated five times in total with the other discontinuous single fibers, and the average value thereof is calculated as the average value of the two-dimensional orientation angles.

By a condition where the discontinuous fibers are dispersed at a monofilament-like state and randomly, pores can be more uniformly present in the core layer 3 than the above-described condition where the discontinuous fibers are dispersed in a form of fiber bundles each formed with 500 or less single fibers. For example, even if pores are formed with a certain size, if the pores are present unevenly, there is a possibility that the sandwich structure 1 locally becomes weak in a region where there are many pores. Therefore, making pores exist uniformly and continuously in the core layer 3 is preferable from the viewpoint of making the sandwich structure 1 high strength.

From such a viewpoint, the fiber dispersion rate of the core layer 3 composed of discontinuous fibers is preferably 90% or more, more preferably closer to 100%. Further, the average value of the two-dimensional orientation angles of discontinuous fibers is preferably 40 to 50 degrees, and it is preferable that it approaches closer to 45 degrees which is an ideal angle.

A mat of discontinuous fibers suitably used for the core layer 3 having pores or a molded body in which a thermoplastic resin (A) is impregnated into discontinuous fibers can be produced, for example, by in advance dispersing discontinuous fibers in the form of fiber bundles each formed by not more than 500 single fibers and/or at a monofilament-like state. As a method of producing a discontinuous fiber mat, concretely, can be used a dry process such as an air laid method of forming discontinuous fibers into a dispersion sheet by air flow or a carding method of mechanically combing discontinuous fibers to form a sheet, and a wet process due to RadRite Corporation method in which discontinuous fibers are stirred in water to make a paper. As means for bringing discontinuous fibers closer to a monofilament-like state, with respect to the dry process, can be exemplified a method of providing an opening bar, a method of further oscillating the opening bar, a method of making the eyes of the card fine (ultrafine state), a method of adjusting the viscosity of the card, or the like, and with respect to the wet process, can be exemplified a method of adjusting stirring conditions of discontinuous fibers, a method of diluting the reinforcing fiber concentration of the dispersion, a method of adjusting the viscosity of the dispersion, a method of suppressing eddy currents at the time of transfer of the dispersion, or the like. In particular, the discontinuous fiber mat is preferably produced by the wet method, and by increasing the concentration of the input fibers, or by adjusting the flow velocity (flow rate) of the dispersion and the speed of a mesh conveyor, the rate of the reinforcing fibers in the discontinuous fiber mat can be easily adjusted. For example, by slowing the speed of the mesh conveyor as compared with the flow velocity of the dispersion, it is difficult for the orientation of the fibers in the obtained mat composed of discontinuous fibers to be oriented in the take-off direction, and it is possible to produce a mat composed of bulky discontinuous fibers. The mat composed of discontinuous fibers may be constituted of discontinuous fibers alone, and the discontinuous fibers may be mixed with matrix resin components in powder form or fiber form, the discontinuous fibers may be mixed with organic compounds or inorganic compounds, or the discontinuous reinforcing fibers may be bound to each other with an interspersed resin component.

Next, a method for producing an integrally molded body according to the present invention will be explained with reference to the drawings.

The present invention provides a method for producing an integrally molded body in which at least a part of an end section of a sandwich structure constituted of a core layer composed of discontinuous fibers and a thermoplastic resin (A) and a skin layer composed of continuous fibers and a resin (B) is formed as a joining section, and a separate structure (C) is joined to the joining section, the method comprising at least the following steps [1] to [5]:
[1] a step of preparing a core layer precursor in which a layer of the thermoplastic resin (A) is disposed on at least one surface of a web composed of the discontinuous fibers;
[2] a step of forming a molded body precursor by disposing a skin layer precursor impregnated with the resin (B) into the continuous fibers on each of both surfaces of the core layer precursor;
[3] a step of heat-press molding the molded body precursor to solidify or cure the skin layer precursor to form a skin layer and to integrate the core layer precursor and the skin layer;
[4] a step of forming the sandwich structure wherein, when expanding the sandwich structure to a predetermined thickness by exhibiting a restoring force of the discontinuous fibers in the core layer precursor and forming pores in the core layer, by bringing a press mold into contact with the sandwich structure, a stepped section is formed at least at a part of an end section of the sandwich structure, and the stepped section is constituted so as to have a main body section forming a high surface in the stepped section, an interface section forming an interface connecting the high surface and a low surface of the stepped section, and a thinnest section having a core layer which has a porosity lower than a porosity of a core layer in the main body section; and
[5] a step of joining and integrating the sandwich structure and the separate structure (C) by disposing the formed sandwich structure in a mold, and by injecting a molten resin of the separate structure (C) with respect to the joining section in the mold so that the molten resin does not contact with the interface but contacts with only at least a part of the thinnest section, at a state in which the flow of the resin is stopped at a middle portion in the mold.

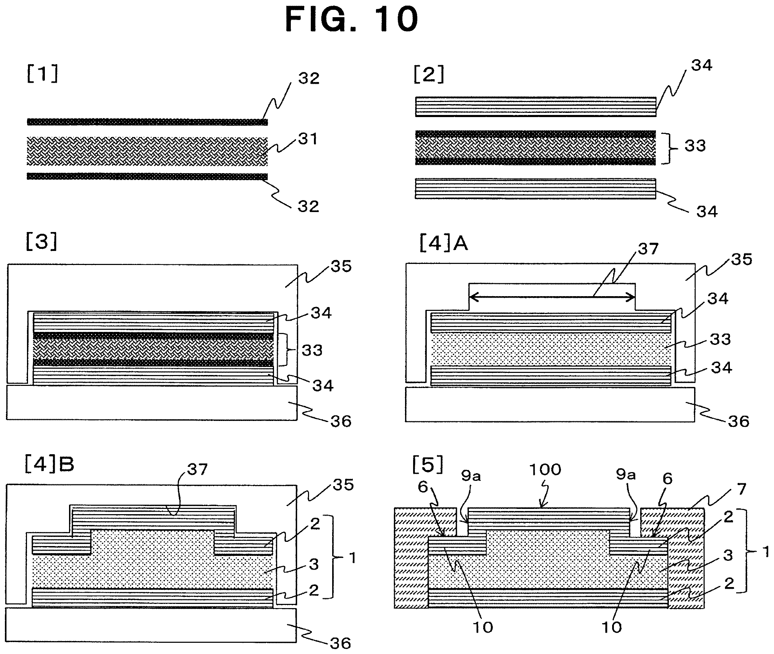

An example of one step of the production method according to the present invention will be explained using Fig. 10 [1] to [5].

Fig. 10 [1] shows the step [1] of preparing a core layer precursor 33 in which a thermoplastic resin (A) layer 32 is disposed on each of both surfaces of a web 31 composed of discontinuous fibers. The thermoplastic resin (A) layer 32 is preferably a film or a nonwoven fabric from the viewpoint of workability of laminating with another base material.

Fig. 10 [2] shows the step [2] of forming a molded body precursor by disposing a skin layer precursor 34 impregnated with resin (B) on each of both surfaces of the core layer precursor 33. The skin layer precursor 34 is preferably, for example, a prepreg prepared by impregnating a resin (B) comprising a thermosetting resin or a thermoplastic resin into continuous fibers.

Fig. 10 [3] shows the step [3] of integrating the core layer precursor 33 and the skin layer precursor 34 by heat press molding using the upper mold 35 and the lower mold 36 to mold a sandwich structure. In this step [3], in case where the resin (B) used for the skin layer precursor 34 is a thermosetting resin, it is cured or solidified by heating, but in case of a thermoplastic resin, after it is softened by heating, cooling is required until the thermoplastic resin is solidified.

Here, the pressure when impregnating the thermoplastic resin (A) layer 32 having the form of a film or a nonwoven fabric into the web 31 composed of discontinuous fibers is preferably 0.5 to 30 MPa, more preferably 1 to 5 MPa. If the pressure is lower than 0.5 MPa, the thermoplastic resin (A) layer 32 may not be impregnated into the discontinuous fiber web 31, and if higher than 30 MPa, the discontinuous fibers of the core layer precursor 33 may flow by the thermoplastic resin (A) layer 32 and the discontinuous fiber web 31 may break. In case of a thermoplastic resin, the temperature at the time of impregnating the film or the nonwoven fabric of the thermoplastic resin (A) layer 32 is preferably a temperature equal to or higher than the melting point or the softening point of the thermoplastic resin, more preferably equal to or higher than the melting point or the softening point + 10°C, and further preferably equal to or higher than the melting point or the softening point + 20°C. Where, if the temperature at the time of impregnating the film or the nonwoven fabric of the thermoplastic resin (A) layer 32 is too high as compared with the melting point or the softening point of the thermoplastic resin, because decomposition or degradation of the thermoplastic resin may occur, it is preferably equal to or lower than the melting point or the softening point of the thermoplastic resin + 150°C.

Next, the process of preparing the skin layer 34 will be explained. For example, in case where the resin (B) is a thermosetting resin, a prepreg impregnated with the rein into continuous fibers is prepared as skin layer precursor. By forming a laminate in which the skin layer precursor 34 is disposed on at least one surface of the core layer precursor 33 obtained in the step [1], and heating this laminate by heating press molding and applying a pressure of 0.5 to 30 MPa, the resin (B) of the skin layer precursor is cured and a skin layer can be manufactured. Further, in case where the resin (B) is a thermoplastic resin, a prepreg impregnated with the rein into continuous fibers can be prepared as the skin layer precursor 34, and by heating by heating press molding and applying a pressure of 0.5 to 30 MPa, the thermoplastic resin is softened, thereafter, by conveying it to a press molding machine for cooling and pressing it up to a temperature at which the thermoplastic resin is solidified, a skin layer can be made. At this time, by simultaneously heat press molding the core layer precursor and the skin layer precursor, the discontinuous fiber web of the core layer precursor enters into the skin layer, and by anchoring effect due to the discontinuous fiber web, an integrally molded body of the core layer precursor and the skin layer precursor can be obtained. The core layer or the core layer precursor and the skin layer are firmly adhered to each other, and such a state is preferable from the viewpoint of exhibiting the flexural properties of the sandwich structure as much as possible.

In the above-described step [3], as a facility for producing the core layer precursor and the skin layer, a press molding machine or a double belt press can be suitably used. In case of a batch system, it is preferable to apply the former, and in case where a thermoplastic resin is used, productivity can be improved by employing an intermittent press system in which two or more machines for heating and for cooling are arranged in parallel. In case of a continuous system, it is preferable to apply the latter, and because continuous processing can be easily performed, continuous productivity is excellent.

Fig. 10 [4]A shows a state where in exhibiting the restoring force of the discontinuous fibers in the core layer precursor to expand it up to a predetermined thickness, a press die provided with a shape, of at least a part of the joining section of the board end section and the main body other than the joining section of the sandwich structure, is brought into contact. Concretely, it is a step of changing the upper die 35 to a die having a cavity (region) 37 corresponding to the main body section of the sandwich structure and press molding again to form a core layer. When the core layer precursor 33 is heated by press molding, the binding force of the thermoplastic resin (A) with the discontinuous fibers is weakened by heating due to the press molding, and thereafter, the residual stress of the reinforcing fibers is released by releasing the pressurization, the discontinuous fiber mat present inside springs back, and a core layer with pores whose thickness has been adjusted at a predetermined expansion magnification is formed. At this time, in the board end section of the sandwich structure, by giving a height difference between the region 37 corresponding to the main body section and the region corresponding to the joining section, as shown in Fig. 10 [4]B, a sandwich structure 1 having regions of the main body section and the joining section different in porosity of core layer can be formed.

Thereafter, as shown in Fig. 10 [5], by injection molding the molten resin (C) into the joining section 6 formed in at least a part of the end section of the sandwich structure 1, an integrated integrally molded body 100 joined and integrated with the separate structure (C) 7 is obtained. When injection molding the resin (C), as shown in Fig. 10 [5], the molten resin for the separate structure (C) 7 is injected at a state where the flow of the resin is stopped at a middle in the mold so as not to contact with the interface 9a and so as to contact with only at least a part of the thinnest section 10. There is no particular restriction on the method of integrating the separate structure (C) and the sandwich structure. For example, there are (1) a method of separately molding a sandwich structure and a separate structure (C) in advance and joining both structures, and (2) a method of molding a sandwich structure in advance and joining both structures simultaneously at the time of molding a separate structure (C). As a concrete example of the above-described (1), a sandwich structure is press molded and a separate structure (C) is manufactured by injection molding. There is a method of joining the manufactured respective members by known welding means such as hot plate welding, vibration welding, ultrasonic welding, laser welding, resistance welding, and induction heating welding. On the other hand, as a concrete example of the above-described (2), there is a method of press molding a sandwich structure, then inserting it into an injection molding die, and injection molding a material forming a separate structure (C) into the mold, thereby integrating them. From the viewpoint of mass productivity of an integrated molded article, the method (2) is preferably used, and insert injection molding and outsert injection molding are preferably used.

Further, in the forming step of the sandwich structure [4], it is preferred that the pores formed in the core layer are formed by heating the core layer precursor containing the discontinuous fibers and the thermoplastic resin (A) to a temperature higher than the softening point or the melting point of the thermoplastic resin (A) and pressurizing it, then releasing the pressurization, and expanding it by spring back. By thus heating and pressurizing the entire core layer precursor at a time and releasing the pressurization, even in case of a sandwich structure having a large area or a joining section having a complicated stepped section, it is possible to mold the entire sandwich structure at a time accurately.

The porosity can be controlled by adjusting the thickness of the core layer. The larger the thickness of the core layer at the time of releasing pressurization is controlled, the more the amount of expansion due to spring back is increased and the porosity formed in the core layer can be increased. Concretely, in addition to making the cavity height of the upper mold so as to become a predetermined core layer height, in case where the product types increase, a method of controlling a distance between the upper mold and the lower mold at the time of releasing the pressurization can also be used.

Here, the method of manufacturing the joining section will be further explained. As shown in Fig. 10 [4]B, although the skin layer can be deformed to conform to the shape of the region 37 of the upper mold by the spring back of the core layer precursor, it is also possible to form the joining section by other methods.

Further, as a facility for heating the skin layer precursor and the core layer precursor, a hot air oven and an IR (infrared) heater can be suitably used.

Furthermore, in the present invention, it is preferred that by providing a joining layer in the skin layer or the core layer of the sandwich structure and thereafter injection molding the molten resin (C) of the separate structure, and by solidifying or curing the injection molding resin (C) onto a portion different in thickness formed in the circumferential end section of the sandwich structure, the separate structure (C) is joined and integrated. As the method of providing a joining layer in the skin layer or the core layer of the sandwich structure, there are a method of applying an adhesive of the same material as that of the separate structure (C) to a portion different in thickness formed on the side surface of the circumferential end section of the sandwich structure, and a method of laminating a film or a nonwoven fabric of the same material as that of the separate structure (C) on the outermost layer of the layer or the core layer and integrating the joining layer with the sandwich structure by heat press molding. From the viewpoint of excellent productivity, the method of laminating a film or a nonwoven fabric of the same material as that of the separate structure (C) on the outermost layer of the layer or the core layer and integrating the joining layer with the sandwich structure by heat press molding is preferred.

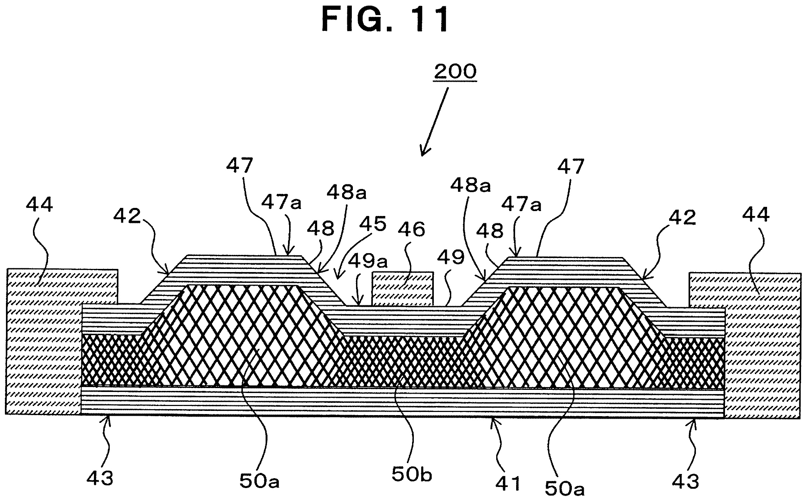

As described above, in the integrally molded body according to the present invention, it is essential to form a stepped section in the end section of the sandwich structure and to have the separate structure (C) joined to only at least a part of the thinnest section, but it is possible to provide a similar structural part in a part other than the end section of the sandwich structure. For example, as shown in a schematic sectional view in the thickness direction of an integrally molded body 200 showing an example in which another stepped section and another separate structure (C) are provided to a portion other than the end section of the sandwich structure in Fig. 11, stepped sections 42 similar to that shown in Figs. 2 and 3 are formed in at least a part of the end sections of a sandwich structure 41, and separate structures (C) 44 are joined to only at least a part of thinnest sections 43 thereof, and in this example, another stepped section 45 is formed also in an arbitrary part other than a part of the end sections of the sandwich structure 41, and another separate structure (C) 46 different from the separate structure (C) 44 is arranged. This another stepped section 45 comprises main body sections 47 forming high surfaces 47a on both sides of the stepped section 45, interface sections 48 which form other interfaces 48a each connecting the high surface 47 on each side of the stepped section 45 and a low surface 49a located between the high surfaces 47a on both sides, and another thinnest section 49 having a core layer 50b which has a porosity lower than porosities of core layers 50a in the main body sections 47 on both sides, and the separate structure (C) 46 does not contact with any of other interfaces 48a, and is joined to only at least a part of another thinnest section 49. In the example illustrated, each of the other interfaces 48a located on both sides of the stepped section 45 has an inclination angle similar to that shown in Figs. 2 and 3, and the separate structure (C) 46 is joined to a part of the upper surface of the upper-side skin layer of another thinnest section 49.

Thus, the technology of joining the separate structure (C) to only at least a part of the thinnest section without contacting it with the interface of the interface section in the present invention can also be applied similarly to parts other than the end section of the sandwich structure. Therefore, it becomes possible to substantially prevent heat transfer from the resin forming the separate structure (C) to the interface section also at a portion other than the end section of the sandwich structure, to remove the possibility of occurrence of defects on the design surface side originating from sink marks caused by the heat transfer, and to obtain a desired integrally molded body more reliably and easily.

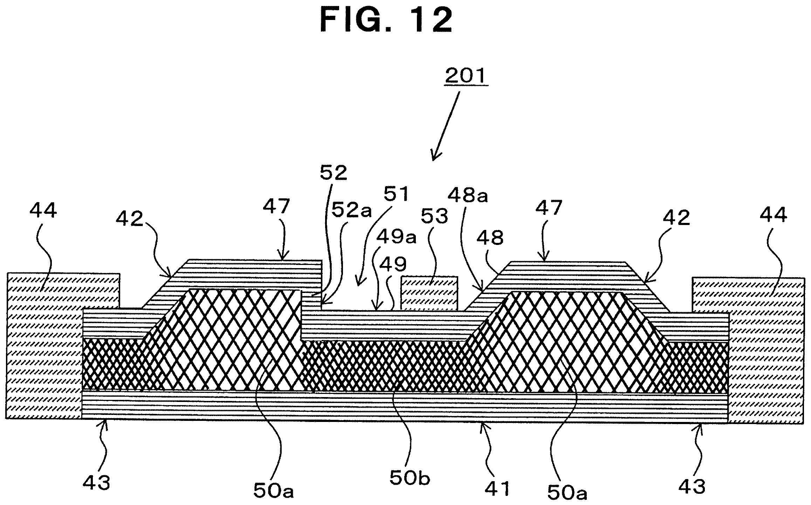

Further, in case where the technology according to the present invention is applied to a portion other than the end section of the sandwich structure, for example, as shown in the example of another integrally molded body 201 in Fig. 12, another interface 52a of another interface section 52 (one of the other interface sections in the illustrated example) of another stepped section 51 formed in an arbitrary portion other than a part of the end section of the sandwich structure 41 is formed as a surface standing up vertically from the upper surface of another thinnest section 49 (the low surface in another stepped section 51), and the separate structure (C) 53 does not contact with another interface 48a and another interface 52a, but is joined to only at least a part of another thinnest section 49. In the illustrated example, the separate structure (C) 53 is disposed at a position shifted to the one side from the center of the upper surface of another thinnest section 49 (low surface in another stepped section 51). Thus, the separate structure (C) 53 can be disposed at an arbitrary position as long as it adopts a structure not to be contacted with another interface 48a and another interface 52a, another stepped sections 45, 51 can also be formed substantially in an arbitrary shape, and further, the separate structures (C) 46, 53 to be joined can also be formed to have substantially arbitrary shape and size.

Also in a portion other than the end section of the sandwich structure as described above, the aforementioned structure applicable in the end section of the sandwich structure, for example, the structure wherein the interface of the interface section has an angle of 1 to 20° with respect to the in-plane direction of the main body section, the structure wherein the joining layer is provided at least in a part of a portion between the skin layer and the separate structure (C), the structure wherein the porosity of the core layer in the region forming the main body section is 50% or more and 80% or less, and the porosity of the core layer in the region forming the thinnest section is 0% or more and less than 50%, the structure wherein the thickness Db of the main body section is in the range of 0.4 to 2 mm, and the thickness Tc in the joining section of the separate structure (C) is in the range of 0.1 to 1.7 mm, the structure wherein Db/Tc is in the range of 1.1 to 20, and the structure wherein the distance L from the edge of the interface section side of the main body section to the separate structure (C) joined to only at least a part of the thinnest section is in the range of 0.1 to 30 mm can be similarly applied.

### Examples

Hereinafter, the effects according to the present invention will be concretely explained based on examples, but the following examples do not limit the present invention at all. Measurement methods used in the examples are described below.

### (1) Length and angle of sandwich structure and separate structure (C):

A small piece including a joining section was cut out from an integrally molded body, and after being embedded in an epoxy resin, a cross section in the thickness direction of the integrally molded body was polished to prepare a sample. After photographing this sample using a laser microscope (VK-9510, supplied by Keyence Corporation), using an image measurement tool, as shown in Fig. 5, a length of a joining section (Lb) of a separate structure (C) joined to a sandwich structure, a distance (L) from the edge of an interface section to the separate structure (C), and an angle (θ) of the interface section of the sandwich structure were measured.

### (2) Joining strength:

A test piece was cut out so as to have a size of 50 mm in length and 25 mm in width in a plane perpendicular to the thickness direction of the integrally molded body so that the joining section was located at the center in the longitudinal direction of the integrally molded body, the flexural strength was determined in accordance with ASTM D 790 at a condition where the distance between fulcrums was 32 times the thickness of the test piece, and this was taken as the joining strength. Furthermore, the obtained joining strength was evaluated according to the following criteria. A and B were acceptable and C and D were failed.
A: 100 MPa or more
B: 60 MPa or more and less than 100 MPa
C: 40 MPa or more and less than 60 MPa
D: less than 40 MPa or impossible to measure

### (3) Depression and appearance on design surface side of integrally molded body:

Depression of the design surface side near the joining section with the separate structure (C) joined to the sandwich structure as shown in Fig. 1 was measured by the undulation measurement of a surface roughness meter (Surfcom 480A, supplied by Tokyo Seimitsu Co., Ltd.), and the appearance was visually confirmed. Furthermore, the obtained depression amount and appearance were evaluated according to the following criteria. ○ was accepted, and Δ and × were rejected.
○: depression is less than 5 µm and visual depression is not seen
Δ: depression is not less than 5 µm and less than 20 µm
×: depression is 20 µm or more

### (Example 1)

When manufacturing a sandwich structure in which the porosities of the core layers of the main body section and the thinnest section are different as shown in Fig. 10 [4]B, by using the upper mold 35 giving an angle of 4 degrees to the interface section, a sandwich structure with an angle (θ) of 4 degrees for its interface section was obtained.

The sandwich structure obtained above was set in an injection molding mold, the mold was closed, and then a molten resin (C) was injection molded to produce an integrally molded body shown in the schematic diagram of Fig. 5. The integrally molded body has a high joining strength and a good appearance with no design surface side depression near the joining section with the separate structure (C) joined to the sandwich structure was obtained. The properties of the integrally molded body are summarized in Table 1.

### (Example 2)

When manufacturing a sandwich structure in which the porosities of the core layers of the main body section and the thinnest section are different as shown in Fig. 10 [4]B, by using the upper mold 35 giving an angle of 90 degrees to the interface section, a sandwich structure with an angle (θ) of 90 degrees for its interface section was obtained.

The sandwich structure obtained above was set in an injection molding mold, the mold was closed, and then a molten resin (C) was injection molded to produce an integrally molded body shown in the schematic diagram of Fig. 5. The integrally molded body has a high joining strength and a good appearance with no design surface side depression near the joining section with the separate structure (C) joined to the sandwich structure was obtained. The properties of the integrally molded body are summarized in Table 1.

### (Example 3)

When manufacturing a sandwich structure in which the porosities of the core layers of the main body section and the thinnest section are different as shown in Fig. 10 [4]B, by using the upper mold 35 giving an angle of 2 degrees to the interface section, a sandwich structure with an angle (θ) of 2 degrees for its interface section was obtained.

The sandwich structure obtained above was set in an injection molding mold, the mold was closed, and then a molten resin (C) was injection molded to produce an integrally molded body shown in the schematic diagram of Fig. 5. The integrally molded body has a high joining strength and a good appearance with no design surface side depression near the joining section with the separate structure (C) joined to the sandwich structure was obtained. The properties of the integrally molded body are summarized in Table 1.

### (Example 4)

When manufacturing a sandwich structure in which the porosities of the core layers of the main body section and the thinnest section are different as shown in Fig. 10 [4]B, by using the upper mold 35 giving an angle of 18 degrees to the interface section, a sandwich structure with an angle (θ) of 18 degrees for its interface section was obtained.

The sandwich structure obtained above was set in an injection molding mold, the mold was closed, and then a molten resin (C) was injection molded to produce an integrally molded body shown in the schematic diagram of Fig. 5. The integrally molded body has a high joining strength and a good appearance with no design surface side depression near the joining section with the separate structure (C) joined to the sandwich structure was obtained. The properties of the integrally molded body are summarized in Table 1.

### (Reference Example 5)

The sandwich structure was manufactured in the same manner as in Example 1. After setting the obtained sandwich structure in the injection molding mold, and closing the mold, when injection molding the molten resin (C), an integrally molded body shown in the schematic diagram of Fig. 5, in which the length (Lb) of the joining section was short to be 2 mm, was produced. Although a good appearance with no design surface side depression near the joining section with the separate structure (C) joined to the sandwich structure was obtained, the joining strength of the integrally molded body was low and it did not reach the acceptance level. As a result, it was found from the comparison with Example 3 that it is preferable to set the length (Lb) of the joining section to 3 mm in order to bring also the joining strength to the acceptance level. The properties of the integrally molded body are summarized in Table 1.

### (Comparative Example 1)

The sandwich structure was manufactured in the same manner as in Example 1. After setting the obtained sandwich structure in the injection molding mold, and closing the mold, when injection molding the molten resin (C), an integrally molded body, in which the separate structure (C) was joined up to the interface section as shown in Fig. 1, was produced. Although the integrally molded body has a high joining strength, the design surface side depression near the joining section with the separate structure (C) joined to the sandwich structure was large. The properties of the integrally molded body are summarized in Table 1.

### (Comparative Example 2)

The sandwich structure was manufactured in the same manner as in Example 4. After setting the obtained sandwich structure in the injection molding mold, and closing the mold, when injection molding the molten resin (C), an integrally molded body, in which the length (Lb) of the joining section was short to be 2 mm and the separate structure (C) was joined up to the interface section as shown in Fig. 1, was produced. The integrally molded body was low in joining strength and did not reach the acceptable level. Further, the design surface side depression near the joining section with the separate structure (C) joined to the sandwich structure was also large. The properties of the integrally molded body are summarized in Table 1.

**Table 1**

| | | Example 1 | Example 2 | Example 3 | Example 4 | Reference Example 5 | Comparative Example 1 | Comparative Example 2 |
|---|---|---|---|---|---|---|---|---|
| Length of joining section (Lb) | mm | 5 | 5 | 3 | 30 | 2 | 15 | 2 |
| Distance (L) from edge on side of interface section to separate structure (C) | mm | 10 | 0.1 | 30 | 30 | 13 | 0 | 0 |
| Angle of interface section or joining section (θ) | Degree | 4 | 90 | 2 | 18 | 4 | 4 | 18 |
| Joining strength | - | A | A | B | A | C | A | C |
| Depression | mm | ○ | ○ | ○ | ○ | ○ | × | × |

### Industrial Applicability

The integrally molded body and the method for producing the same according to the present invention can be applied to any application requiring to be lightweight, high strength, high rigidity and requiring thinning.

### Explanation of symbols

1,41: sandwich structure
2: skin layer
3: core layer
3a: core layer with high porosity
3b: core layer with low porosity
4: fibers in core layer
5: pores
6: joining section
7: separate structure (C)
8: main body section
8a: high surface of stepped section
9, 42: interface section
9a: interface
10, 43: thinnest section
10a: low surface of stepped section (upper surface of thinnest section)
10b: side surface of thinnest section
11: stepped section
12: mold
13: damming structure section
14, 15, 16, 17, 18, 19: discontinuous single fibers
20: two-dimensional contact angle, two-dimensional orientation angle
21: joining layer
31: web composed of discontinuous fibers
32: thermoplastic resin (A)
33: core layer precursor
34: skin layer precursor
35: upper mold of press mold
36: lower mold of press mold
37: region with different gap in press mold
45, 51: another stepped section
46, 53: separate structure (C)
47: main body section
47a: high surface of another stepped section
48, 52: another interface section
48a, 52a: another interface
49: another thinnest section
49a: low surface of another stepped section (upper surface of another thinnest section)
50a: core layer with high porosity
50b: core layer with low porosity
100, 200, 201: integrally molded body

## Claims

1. An integrally molded body in which at least a part of an end section of a sandwich structure constituted of a core layer composed of discontinuous fibers and a thermoplastic resin (A) and a skin layer composed of continuous fibers and a resin (B) is formed as a joining section, and a separate structure (C) is disposed to the joining section, wherein: the sandwich structure has a stepped section at least at a part of the end section; the stepped section is constituted of a main body section forming a high surface in the stepped section, an interface section forming an interface connecting the high surface and a low surface of the stepped section, and a thinnest section having a core layer which has a porosity lower than a porosity of a core layer in the main body section; and the separate structure (C) does not contact with the interface, and is joined to only at least a part of the thinnest section.

2. The integrally molded body according to claim 1, wherein the interface of the interface section has an angle of 1 to 20° with respect to an in-plane direction of the main body section.

3. The integrally molded body according to claim 1 or 2, wherein a joining layer is provided at least in a part of a portion between the skin layer and the separate structure (C).

4. The integrally molded body according to any one of claims 1 to 3, wherein a joining layer is provided at least in a part of a portion between the core layer and the separate structure (C).

5. The integrally molded body according to any one of claims 1 to 4, wherein the porosity of the core layer in a region forming the main body section is 50% or more and 80% or less, and the porosity of the core layer in a region forming the thinnest section is 0% or more and less than 50%.

6. The integrally molded body according to any one of claims 1 to 5, wherein the joining section is formed over the entire circumference of the sandwich structure.

7. The integrally molded body according to any one of claims 1 to 6, wherein a length Lb of the joining section from an end surface of the sandwich structure is in a range of 3 to 30 mm.

8. The integrally molded body according to any one of claims 1 to 7, wherein a thickness Db of the main body section is in a range of 0.4 to 2 mm and a thickness Tc of the joining section is in a range of 0.1 to 1.7 mm.

9. The integrally molded body according to claim 8, wherein Db/Tc is in a range of 1.1 to 20.

10. The integrally molded body according to any one of claims 1 to 9, wherein a distance L from an edge of the main body section at a side of the interface section to the separate structure (C) joined to only at least a part of the thinnest section is in a range of 0.1 to 30 mm.

11. The integrally molded body according to any one of claims 1 to 10, wherein the sandwich structure has another stepped section at a portion other than at a part of the end section and another separate structure (C) is arranged, and the other stepped section is constituted of main body sections forming high surfaces on both sides of the other stepped section, other interface sections forming other interfaces connecting the high surfaces on both sides of the other stepped section and a low surface positioned between the high surfaces on both sides, and another thinnest section having a core layer which has a porosity lower than porosities of core layers in the main body sections on both side, and the other separate structure (C) does not contact with the other interfaces, and is joined to only at least a part of the other thinnest section.

12. The integrally molded body according to any one of claims 1 to 11, wherein a thickness of the main body section and a thickness of a portion composed of only the separate structure (C) joined via the joining section are the same.

13. The integrally molded body according to any one of claims 1 to 12, wherein the core layer is formed by expanding a core layer precursor composed of discontinuous fibers and the thermoplastic resin (A) in its thickness direction by spring back due to heating to form pores.

14. The integrally molded body according to any one of claims 1 to 13, wherein a content of the discontinuous fibers forming the core layer is in a range of 5 to 75% by weight and a content of the thermoplastic resin (A) is in a range of 25 to 95% by weight.

15. The integrally molded body according to any one of claims 1 to 14, wherein a number average fiber length of the discontinuous fibers forming the core layer is in a range of 0.5 to 50 mm.

16. The integrally molded body according to any one of claims 1 to 15, wherein the discontinuous fibers forming the core layer are present at a state of fiber bundles each composed of 500 or less single fibers, and the fiber bundles are randomly oriented.

17. The integrally molded body according to claim 16, wherein the discontinuous fibers forming the core layer are dispersed at a monofilament-like state, and an average value of two-dimensional orientation angles formed by discontinuous single fibers (a) and other discontinuous single fibers (b) crossing the discontinuous single fibers (a) is in a range of 10 to 80 degrees.

18. A method for producing an integrally molded body in which at least a part of an end section of a sandwich structure constituted of a core layer composed of discontinuous fibers and a thermoplastic resin (A) and a skin layer composed of continuous fibers and a resin (B) is formed as a joining section, and a separate structure (C) is joined to the joining section, the method comprising at least the following steps [1] to [5]:
[1] a step of preparing a core layer precursor in which a layer of the thermoplastic resin (A) is disposed on at least one surface of a web composed of the discontinuous fibers;
[2] a step of forming a molded body precursor by disposing a skin layer precursor impregnated with the resin (B) into the continuous fibers on each of both surfaces of the core layer precursor;
[3] a step of heat-press molding the molded body precursor to solidify or cure the skin layer precursor to form a skin layer and to integrate the core layer precursor and the skin layer;
[4] a step of forming the sandwich structure wherein, when expanding the sandwich structure to a predetermined thickness by exhibiting a restoring force of the discontinuous fibers in the core layer precursor and forming pores in the core layer, by bringing a press mold into contact with the sandwich structure, a stepped section is formed at least at a part of an end section of the sandwich structure, and the stepped section is constituted so as to have a main body section forming a high surface in the stepped section, an interface section forming an interface connecting the high surface and a low surface of the stepped section, and a thinnest section having a core layer which has a porosity lower than a porosity of a core layer in the main body section; and
[5] a step of joining and integrating the sandwich structure and the separate structure (C) by disposing the formed sandwich structure in a mold, and by injecting a molten resin of the separate structure (C) with respect to the joining section in the mold so that the molten resin does not contact with the interface but contacts with only at least a part of the thinnest section, at a state in which the flow of the resin is stopped at a middle portion in the mold.

19. The method for producing an integrally molded body according to claim 18, wherein, in the step [4] of forming the sandwich structure, after the core layer precursor containing the discontinuous fibers and the thermoplastic resin (A) is heated and pressurized to a temperature higher than a softening point or melting point of the thermoplastic resin (A), the pores are formed by releasing the pressurization and expanding the core layer precursor by spring back.

20. The method for producing an integrally molded body according to claim 18 or 19, wherein, in the step [2] of forming the molded body precursor, a skin layer precursor disposed with a skin layer only to a region corresponding to a main body section in at least one surface of the core layer is formed, the skin layer precursor is solidified or cured by heat pressing to form a skin layer, and the main body section having the core layer having pores is formed by expanding to a predetermined thickness.

21. The method for producing an integrally molded body according to any one of claims 18 to 20, wherein the sandwich structure and the separate structure (C) are joined and integrated with each other, by disposing a thermoplastic resin film or nonwoven fabric or applying an adhesive on the skin layer or core layer forming the joining section and then injection molding the molten resin of the separate structure (C).
